# EUROPEAN PATENT SPECIFICATION

(11) **EP 4 177 118 B1**
(45) Date of publication and mention of the grant of the patent: **13.08.2025**
(21) Application number: 21206939.7
(22) Date of filing: 08.11.2021
(51) Int. Cl.: B60R 25/20, B60R 25/24, G07C 9/00, H04W 4/40

(54) **APPARATUS, USER EQUIPMENT, SYSTEM AND METHOD**
VORRICHTUNG, BENUTZERGERÄT, SYSTEM UND VERFAHREN
APPAREIL, ÉQUIPEMENT UTILISATEUR, SYSTÈME ET PROCÉDÉ

(43) Date of publication of application: 10.05.2023
(73) Proprietor: Bayerische Motoren Werke Aktiengesellschaft, 80809 München (DE)
(72) Inventor: Eichhorn, Julian, Menlo Park, CA 94025 (US); Rottgardt, Philipp, Menlo Park, CA 94025 (US); Mantovani, Francesco, Redwood City, CA 94063 (US); Odak, Dominik, Mountain View, CA 94043 (US); Grein, Daniel, Novato, CA 94947 (US); Neff, Albrecht, Sunnyvale, CA 94087 (US)

(56) References cited:
- US-A1- 2018 326 947
- US-A1- 2020 047 714
- US-A1- 2020 216 077
- US-A1- 2021 070 252

## Description

The present disclosure relates to the field of digital vehicle keys. In particular, examples of the present disclosure relate to a server, a system and a method.

Digital vehicle keys are the digital equivalents of classical hardware vehicle keys and allow to perform various vehicle functions such as locking and unlocking or starting of the vehicle. However, the functionalities provided for digital vehicle keys are still limited. Further, users conventionally have to provide several identifiers for accessing vehicles remotely.

Document US 2018326947 A1 relates to a method and system to utilize a key fob in a car-sharing vehicle access system. The method involves verifying the fob for use with a specific vehicle, receiving an activation command, obtaining authorization to control certain functions of the vehicle, enabling transmission of vehicle commands via the fob, allowing the user to request commands, sending the requested command to the vehicle, and then disabling the fob from further controlling the vehicle functions.

Document US 2020047714 A1 relates to a system for enabling access to and use of a vehicle via electronic keys using a cloud-based server. The vehicle is equipped with electronics and subsystems that allow for unlocking and starting of the vehicle. The vehicle's communication circuitry can communicate with the cloud system and a mobile device, and receive requests for vehicle access from the mobile device. These requests must include a unique access code that is associated with certain access privileges. The vehicle is programmed to authenticate the request from the mobile device, and provide an electronic key if the request is authentic and the access privileges of the unique access code are met. The electronic key enables unlocking and starting of the vehicle consistent with the defined privileges of the unique access code.

Document US 2020216077 A1 relates to a technique to personalize a vehicle for one or more users. The process entails identifying the user accessing the vehicle, gathering first customization settings linked to this user identifier from a remote server, and configuring the vehicle's systems based on the received customization settings.

Document US 2021070252 A1 relates to verifying a user's identity when they're on a transportation vehicle. The transportation vehicle is linked to an external device that stores a secret code for authentication and to a token that stores another secret code. The method involves transmitting the token secret code to the transportation vehicle when a user interacts with the token. A new secret code is generated from the token secret code and compared to the authentication secret code. If they match, the user is authorized to ride the transportation vehicle. An equipment for this type of user authentication is also provided.

There may be a demand for improved utilization of digital vehicle keys.

This demand may be satisfied by the subject-matter of the appended independent and dependent claims.

An example relates to a server communicatively coupled to a vehicle via a network. The server comprises circuitry configured to receive request data. The request data indicate a request to provide dynamic status information about the vehicle and/or to execute a vehicle function at the vehicle. The request data further indicate an identifier of a digital vehicle key for the vehicle. Further, the apparatus comprises circuitry configured to determine, based on the identifier of the digital vehicle key, whether the request is in compliance with vehicle access and/or control rights assigned to the digital vehicle key. In addition, the apparatus comprises circuitry configured to process the request, if it is determined that the request is in compliance with the vehicle access and/or control rights assigned to the digital vehicle key. For processing the request, the circuitry is configured to request the dynamic status information from the vehicle via the network and forward the dynamic status information upon receipt from the vehicle to a sender of the request data, if the request data indicate the request to provide the dynamic status information. **If** the request data indicate the request to execute the vehicle function at the vehicle, the circuitry is configured to control the vehicle via the network to execute the vehicle function, if the request data indicate the request to execute the vehicle function at the vehicle.

Another example relates to a system comprising a server as described herein and a user equipment (UE). The UE comprises a data storage configured to store the digital vehicle key. Further, the UE comprises processing circuitry configured to generate the request data **In** addition, the UE comprises wireless communication circuitry configured to transmit the request data to the server or another server communicatively coupled to the server.

A further example relates to a method for a server communicatively coupled to a vehicle via a network. The method comprises receiving request data. The request data indicate a request to provide dynamic status information about the vehicle and/or to execute a vehicle function at the vehicle. The request data further indicate an identifier of a digital vehicle key for the vehicle.

Additionally, the method comprises determining, based on the identifier of the digital vehicle key, whether the request is in compliance with vehicle access and/or control rights assigned to the digital vehicle key. The method further comprises processing the request, if it is determined that the request is in compliance with the vehicle access and/or control rights assigned to the digital vehicle key. Processing the request comprises requesting the dynamic status information from the vehicle via the network and forwarding the dynamic status information upon receipt from the vehicle to a sender of the request data, if the request data indicate the request to provide the dynamic status information. If the request data indicate the request to execute the vehicle function at the vehicle, processing the request comprises controlling the vehicle via the network to execute the vehicle function.

Examples of the present disclosure may allow to use the digital vehicle key as identifier for accessing dynamic status information about the vehicle and/or executing a vehicle function at the vehicle. No other (e.g. third-party) identifiers are needed.

Some examples of apparatuses, methods and/or computer programs will be described in the following by way of example only, and with reference to the accompanying figures, in which
Fig. 1 illustrates a system comprising an apparatus and a UE;
Fig. 2 illustrates a first exemplary data flow;
Fig. 3 illustrates a second exemplary data flow;
Fig. 4 illustrates a third exemplary data flow;
Fig. 5 illustrates a first exemplary graphical representation of dynamic status information;
Fig. 6 illustrates a second exemplary graphical representation of dynamic status information; and
Fig. 7 illustrates a flowchart of an exemplary method.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

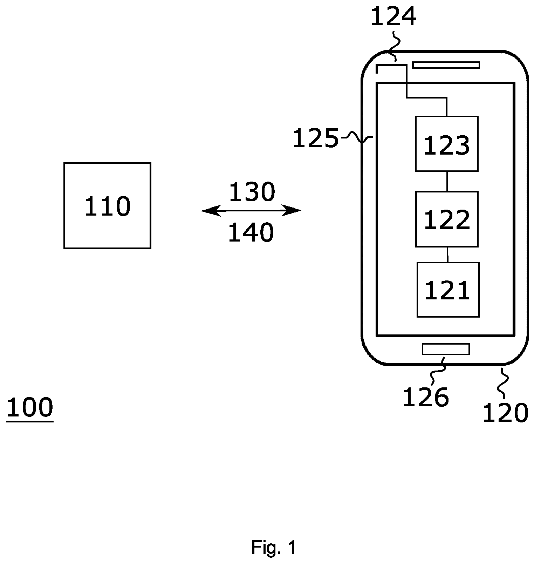

Fig. 1 illustrates a system 100 comprising an apparatus 110 and a UE 120.

The UE 120 is any device used or usable directly by a (end-)user. In the example of Fig. 1, the UE 120 is illustrated as a mobile phone (smartphone). However, the UE 120 is not limited thereto. In other examples, the UE 120 may be any other type of mobile device such as a tablet-computer, a laptop-computer or a wearable device like a smart watch, smart glasses, etc. In still other examples, the UE 120 may be a stationary device such as personal computer.

The UE 120 comprises a data storage 121 configured to store a digital vehicle key for a vehicle. For example, the data storage 121 may be Non-Volatile Memory (NVM) including high-speed electrically erasable memory (commonly referred to as Flash memory), Phase change Random Access Memory (PRAM), Magnetoresistive Random Access Memory (MRAM) and/or a three-dimensional crosspoint (3D XPoint) memory. The memory may be implemented as one or more of solder down packaged integrated circuits, socketed memory modules and plug-in memory cards. The digital vehicle key is a data structure representing a digital copy of the vehicle's physical key. Like the vehicle's physical key, the digital vehicle key may be used to, e.g., unlock or start the vehicle. The vehicle may be any apparatus that comprises one or more wheel driven by an engine (and optionally a powertrain system). For example, the vehicle may be a private vehicle or a commercial vehicle. In particular, the vehicle may be an automobile, a truck, a motorcycle or a tractor.

The UE 120 additionally comprises processing circuitry 122 coupled to the data storage 121. For example, the processing circuitry 122 may be a single dedicated processor, a single shared processor, or a plurality of individual processors, some of which or all of which may be shared, an application processor, a Digital Signal Processor (DSP) hardware, an Application Specific Integrated Circuit (ASIC), a neuromorphic processor or a Field Programmable Gate Array (FPGA). In addition to the data storage 121, the processing circuitry 122 may optionally be coupled to, e.g., Read Only Memory (ROM) for storing software and/or Random Access Memory (RAM).

The processing circuitry 122 is configured to generate request data 130 indicating a request to provide dynamic status information about the vehicle and/or to execute a vehicle function at the vehicle. The dynamic status information about the vehicle is any piece of information that describes a state or condition of the vehicle that can change or vary over time. For example, the dynamic status information may be (indicate) one or more of a geolocation of the vehicle, a lock status of the vehicle (i.e. whether the vehicle is locked or unlocked), a range of the vehicle (i.e. a distance that can still be driven or travelled with the vehicle), a state of charge of an electric battery of the vehicle and a fill level of a fuel tank of the vehicle. However, it is to be noted that the present disclosure is not limited to the foregoing exemplary pieces of dynamic status information. The vehicle function may be any action offered by the vehicle to a user. For example the vehicle function may be one or more of locking or unlocking of the vehicle, opening or closing of a window of the vehicle, starting or stopping of the vehicle, adjusting a setting of an air-conditioning system of the vehicle and adjusting a setting of an entertainment system of the vehicle. However, it is to be noted that the present disclosure is not limited to the foregoing exemplary vehicle functions.

The request data 130 further indicate at least one of an identifier of the digital vehicle key and a token derived from the digital vehicle key. In other words, the request data 130 may either indicate only one of the identifier of the digital vehicle key and the token derived from the digital vehicle key, or the request data 130 may indicate both the identifier of the digital vehicle key and the token derived from the digital vehicle key. The identifier of the digital vehicle key is one or more word, letter, number and/or symbol that identifies (i.e. labels the identity of) the digital vehicle key. The identifier may in some examples be a unique identifier, i.e., an identifier that refers to only one particular digital vehicle key. The token is a sequence of one or more letter, number and/or symbol (e.g. a string) derived according to a predefined rule or set of rules (e.g. defined in an algorithm) from the digital vehicle key. The identifier of the digital vehicle key and/or the token derived from the digital vehicle key may be generated by the processing circuitry 122. In other examples, the identifier of the digital vehicle key and/or the token derived from the digital vehicle key may be read by the processing circuitry 122 from a memory of the UE 120 such as the data storage 121.

For example, the UE 120 may comprise a user interface such as a touch-sensitive display (touch screen) 125 or a button 126 configured to receive a user input (i.e. an input of a user). Accordingly, the processing circuitry 122 may be configured to generate the request data 130 in response to the user input. **In** other examples, the processing circuitry 122 may be configured to generate the request in response to another request received from an application executed by the processing circuitry 122 or any other circuitry of the UE 120.

Additionally, the UE 120 comprises wireless communication circuitry 123 configured to transmit the request data 130 (e.g. by causing one or more antenna 124 of the UE 120 to radiate radio waves modulated with the request data 130). The wireless communication circuitry 123 may, e.g., be configured to operate according to one of the 3rd Generation Partnership Project (3GPP)-standardized mobile/wireless communication networks or systems such as a 5^{th} Generation New Radio (5G NR) network, a Long-Term Evolution (LTE) network or an LTE-Advanced (LTE-A) network. Alternatively or additionally, the wireless communication circuitry 123 may be configured to operate according to mobile/wireless communication networks with different standards, for example, a Worldwide Inter-operability for Microwave Access (WIMAX) network according to the standard IEEE 802.16 of the Institute of Electrical and Electronics Engineers (IEEE), a Wireless Local Area Network (WLAN) according to the standard IEEE 802.11 of the IEEE, a Near-Field Communication (NFC) network or an Ultra-WideBand (UWB) network, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

The UE 120 may comprise further elements such as, e.g., a baseband processor, an audio driver, a camera driver, a display driver, sensors, removable memory, a power management integrated circuit or a smart battery.

In particular, the wireless communication circuitry 123 is configured to transmit the request data 130 to the apparatus 110 for processing the request data 130, or to an entity comprising the apparatus 110.

The apparatus 110 may, e.g., be part of the vehicle, be a server communicatively coupled to the vehicle, or be part of a server communicatively coupled to the vehicle. As claimed, the apparatus 110 is a server.

For example, if the apparatus 110 is part of the vehicle, the wireless communication circuitry 123 of the UE 120 may be configured to transmit the request data 130 to the vehicle via a cellular network or a local wireless network (e.g. a WLAN network or a UWB network). In other examples, if the apparatus 100 is a server or part of a server communicatively coupled to the vehicle via a network (such as the Internet and/or a cellular network), the wireless communication circuitry 123 of the UE 120 may be configured to transmit the request data 130 directly to the apparatus 110 or another (intermediate) server communicatively coupled to the apparatus 110, wherein the other (intermediate) server forwards the request data 130 to the apparatus 110.

The apparatus 110 comprises various circuitry such as interface circuitry, processing circuitry and memory circuitry. The circuitry of the apparatus 110 is configured to receive the request data 130 - either directly from the UE 120 or from one or more intermediate devices such as one or more server.

Additionally, the circuitry of the apparatus 110 is configured to determine, based on the identifier of the digital vehicle key and/or the token, whether the request is in compliance with vehicle access rights and/or control rights assigned to the digital vehicle key. The vehicle access rights define permissions to access the vehicle and/or selected (predefined) pieces of information about the vehicle (e.g. selected pieces of dynamic status information about the vehicle) granted to one or more digital vehicle key and/or one or more user. The control rights define permissions to control selected (predefined) vehicle functions of the vehicle granted to one or more digital vehicle key and/or one or more user. For determining whether the request is in compliance with the vehicle access rights and/or control rights assigned to the digital vehicle key, the circuitry of the apparatus 110 may, e.g., compare whether access to the requested dynamic status information is granted to the digital vehicle key and/or whether control of the requested vehicle function is granted to the digital vehicle key. If access to the requested dynamic status information is granted to the digital vehicle key, it may be determined that the request is in compliance with the vehicle access and/or control rights assigned to the digital vehicle key. Similarly, it may be determined that the request is in compliance with the vehicle access and/or control rights assigned to the digital vehicle key if control of the requested vehicle function is granted to the digital vehicle key.

For example, the identifier of the digital vehicle key and/or the token may comprise information about the vehicle access and/or control rights assigned to the digital vehicle key. Accordingly, the circuitry of the apparatus 110 may determine whether the request is in compliance with vehicle access rights and/or control rights assigned to the digital vehicle key by comparing the request to the vehicle access and/or control rights indicated by the identifier of the digital vehicle key and/or the token. In this example, there is no need for retrieving information about the vehicle access and/or control rights assigned to the digital vehicle key from another source such as a server of a manufacturer of the vehicle.

In other examples, the circuitry of the apparatus 110 may alternatively be configured to retrieve information about the vehicle access and/or control rights assigned to the digital vehicle key from rights management circuitry based on the identifier of the digital vehicle key and/or the token. The rights management circuitry is configured to manage the vehicle access and/or control rights for the vehicle and optionally further vehicle. For example, the rights management circuitry may be supervised and/or operated by a manufacturer of the vehicle or a service provider (e.g. a vehicle rental company). By retrieving the information about the vehicle access and/or control rights assigned to the digital vehicle key from the rights management circuitry, an integrity of the information about the vehicle access and/or control rights assigned to the digital vehicle key may be ensured.

If it is determined that the request is in compliance with the vehicle access and/or control rights assigned to the digital vehicle key, the circuitry of the apparatus 110 is configured to process the request. On the other hand, if it is determined that the request is not in compliance with the vehicle access and/or control rights assigned to the digital vehicle key, the circuitry of the apparatus 110 is configured to discard (reject, dismiss) the request.

The system 100 may allow to use the digital vehicle key as identifier for accessing dynamic status information about the vehicle and/or executing a vehicle function at the vehicle. No other (e.g. third-party) identifiers are needed.

For example, in case the apparatus 110 is a server or part of a server communicatively coupled to the vehicle via a network, the circuitry of the apparatus 110 may be configured to request the dynamic status information from the vehicle via the network and forward the dynamic status information upon receipt from the vehicle to a sender of the request data (e.g. by sending response data indicating the requested dynamic status information to the sender of the request data), if the request data 130 indicate the request to provide the dynamic status information. The sender of the request data 130 may, e.g., be the UE 120, or an intermediate device coupled between the apparatus 110 and the UE 120 such that the UE 120 receives the dynamic status information either directly from the apparatus 110, or from the intermediate device. Similarly, the circuitry of the apparatus 110 may be configured to control the vehicle via the network to execute the vehicle function, if the request data 130 indicate the request to execute the vehicle function at the vehicle. For example, the circuitry of the apparatus 110 may send one or more control command to the vehicle via the network for controlling the vehicle to execute the vehicle function.

In case the apparatus 110 is part of the vehicle, the circuitry of the apparatus 110 may be configured to request the dynamic status information from further vehicle circuitry (e.g. a controller or a sensor of the vehicle) communicatively coupled to the apparatus, if the request data indicate the request to provide the dynamic status information. Analogously to what is described above, the circuitry of the apparatus 110 may further be configured to forward the dynamic status information upon receipt from the further vehicle circuitry to a sender of the request data 130 (e.g. by sending response data indicating the requested dynamic status information to the sender of the request data). The sender of the request data 130 may, e.g., be the UE 120, or an intermediate device coupled between the apparatus 110 and the UE 120 such that the UE 120 receives the dynamic status information either directly from the apparatus 110, or from the intermediate device. Similarly, the circuitry of the apparatus 110 may be configured to control one or more controller of the vehicle, which is communicatively coupled to the apparatus, to execute the vehicle function, if the request data indicate the request to execute the vehicle function at the vehicle. For example, the circuitry of the apparatus 110 may send one or more control command to the controller via an internal data network of the vehicle (e.g. a bus system such as a Controller Area Network, CAN, bus) for controlling the vehicle to execute the vehicle function.

In case the circuitry of the apparatus 110 forwards the dynamic status information to the sender of the request data 130, the circuitry of the apparatus 110 may be configured to forward the dynamic status information to the sender of the request data together with an identifier of the vehicle. The identifier of the vehicle is one or more word, letter, number and/or symbol that identifies (i.e. labels the identity) the vehicle. The identifier may in some examples be a unique identifier, i.e., a unifier that refers to only one particular vehicle. For example, the identifier of the vehicle may be mappable to a Vehicle Identification Number (VIN) of the vehicle. Forwarding the dynamic status information together with the identifier of the vehicle may allow to simplify processing of the dynamic status information for the recipient of the dynamic status information.

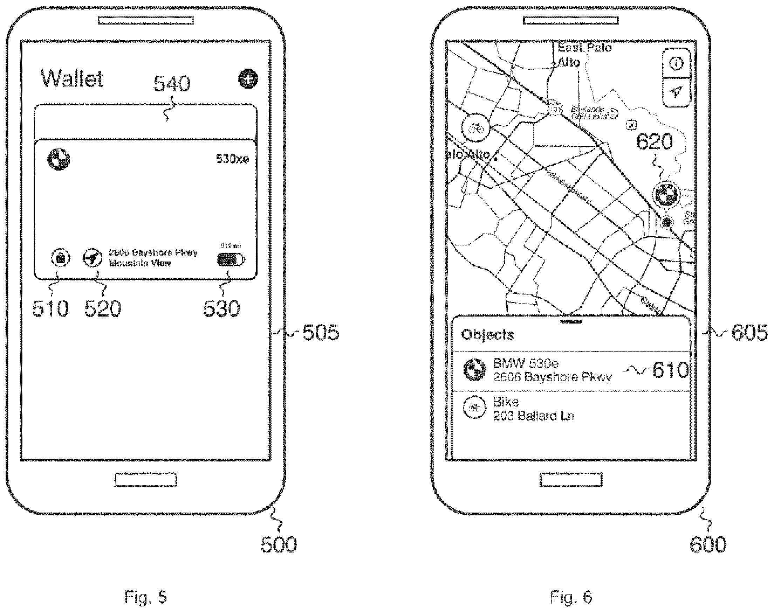

Accordingly, the wireless communication circuitry 123 may in some examples be configured to receive, in response to transmitting the request data 130, response data 140 indicating the requested dynamic status information. The processing circuitry 122 may accordingly be configured to process the response data 140. For example, the processing circuitry 122 may be configured to control the display 125 of the UE 120 to display a graphical representation of the dynamic status information or at least pieces of the dynamic status information. Exemplary graphical representations of the dynamic status information are described below with reference to Fig. 5 and Fig. 6.

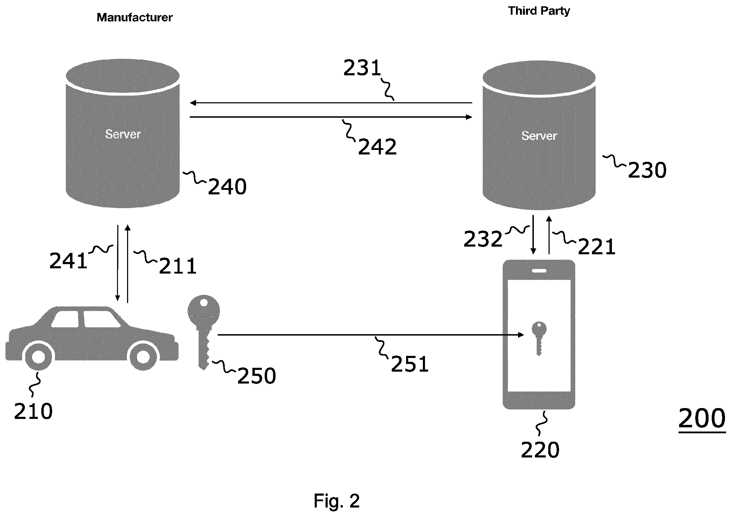

As described above, the apparatus 110 may be employed at various locations. Some exemplary data flows, in which the apparatus 110 is employed at various locations, are described below with reference to Figs. 2 to 4.

Fig. 2 illustrates a first exemplary data flow 200. A digital vehicle key 250 of the vehicle 210 is initially created and transferred (with its secure elements) to a UE 220 as indicated by arrow 251. The creation and the transfer of the digital vehicle key 250 is done according to conventional techniques. The UE 220 is configured as described above with reference to Fig. 1 and stores the digital vehicle key 250 in a data storage.

An application running on the UE 220 requests dynamic status information about the vehicle 210 (e.g. geolocation, range or state of charge) and/or execution of a vehicle function at the vehicle 210 (e.g. locking or unlocking of the vehicle). Alternatively, the request for the dynamic status information or the execution of the vehicle function may be triggered by a user input at the UE 220. The UE 220 generates according request data indicating the request to provide dynamic status information about the vehicle 210 and/or to execute a vehicle function at the vehicle 210. The request data further indicate an identifier of the digital vehicle key 250 and/or a token derived from the digital vehicle key 250. The request data are sent to a server 230 by the UE 220 as indicated by arrow 221. The server 230 is a third-party server such as a server operated by/for a manufacturer of the UE 220, a manufacturer of an operating system running on the UE 220 or any other service provider such as a vehicle rental company.

The server 230 forwards the request data to another server 240. The server 240 is a server operated by/for a manufacturer of the vehicle 210. The server 240 is configured as above with reference to Fig. 1 for the apparatus 110. That is, the server 240 determines, based on the identifier of the digital vehicle key and/or the token, whether the request is in compliance with vehicle access and/or control rights assigned to the digital vehicle key. As described above, the identifier of the digital vehicle key and/or the token may comprise information about the vehicle access and/or control rights assigned to the digital vehicle key. Alternatively, the server 240 may retrieve the information about the vehicle access and/or control rights assigned to the digital vehicle key from rights management circuitry (e.g. implemented in the server 240 or provided by another server operated by/for the manufacturer of the vehicle 210) based on the identifier of the digital vehicle key and/or the token.

In case the server 240 determines that the request is not in compliance with the vehicle access and/or control rights assigned to the digital vehicle key, the server 240 discards the request. **If** it is determined by the server 240 that the request is in compliance with the vehicle access and/or control rights assigned to the digital vehicle key, the server 240 processes the request.

For example, if the request data indicate the request to execute the vehicle function at the vehicle 210, the server controls the vehicle via a network to execute the vehicle function (e.g. by sending corresponding control data) as indicated by arrow 241. The vehicle 210 accordingly executes the requested vehicle function.

If the request data indicate the request to provide the dynamic status information, the server 240 requests the dynamic status information from the vehicle as indicated by arrow 241. The vehicle 210 gathers the requested dynamic status information and sends it to the server 240 as indicated by arrow 211. According to examples, the vehicle 210 may provide the dynamic status information together with an identifier of the vehicle 210. For example, the identifier of the vehicle 210 may be mappable to a VIN of the vehicle 210.

The server 240 forwards the dynamic status information upon receipt from the vehicle 210 to the server 230 as indicated by the arrow 242. According to examples, the server 240 may forward the dynamic status information together with the identifier of the vehicle.

The server 230 forwards the dynamic status information upon receipt from the server 240 to the UE 220 as indicated by arrow 232 such that the UE 220 is able to process the dynamic status information. For example, the UE 220 may display a graphical representation of the dynamic status information or at least pieces of the dynamic status information. Exemplary graphical representations of the dynamic status information are described below with reference to Fig. 5 and Fig. 6.

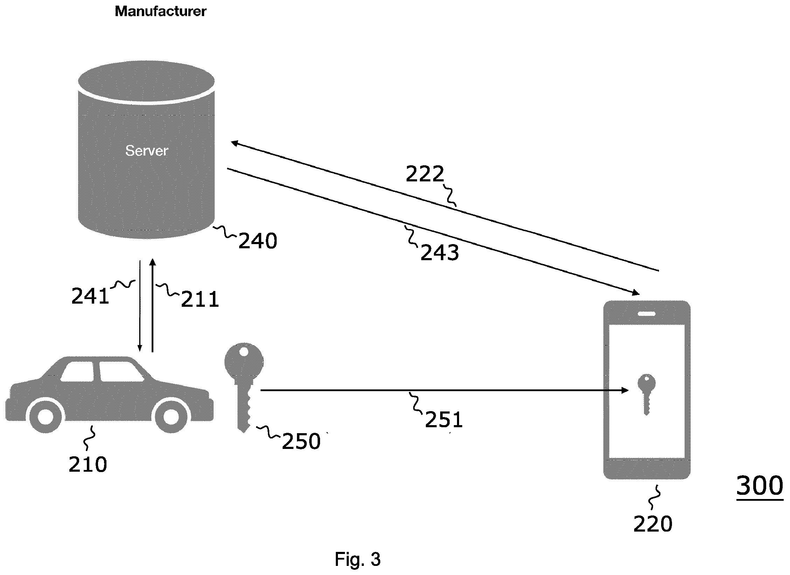

**Fig. 3** illustrates a second exemplary data flow 300. The data flow 300 is identical to the above described data flow 200 except that the third-party server 230 is omitted. In other words, the UE 220 directly communicates with the server 240 in the example of Fig. 3. Accordingly, the UE 220 sends the request data to the server 240 operated by/for a manufacturer of the vehicle 210 as indicated by arrow 222. The server 240 performs the above described processing of the request data.

As the server 230 is omitted in the example of Fig. 3, the server 240 forwards the dynamic status information upon receipt from the vehicle 210 to the UE 240 as indicated by the arrow 243. Analogously to what is described above, the server 240 may forward the dynamic status information together with the identifier of the vehicle.

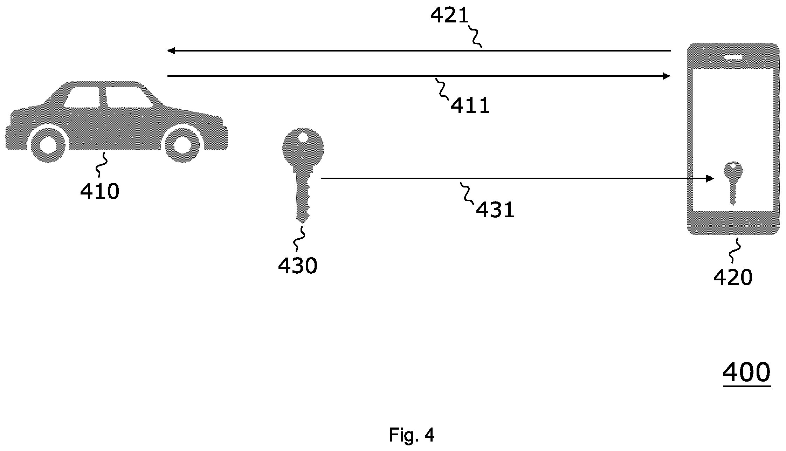

**Fig. 4** illustrates a third exemplary data flow 400. In contrast to the examples of Fig. 2 and Fig. 3, the vehicle 410 and the UE 420 communicate directly with each other in the example Fig. 4 (e.g. via a cellular network or a local wireless network). Analogously to what is described above, a digital vehicle key 430 of the vehicle 410 is initially created and transferred (with its secure elements) to the UE 420 as indicated by arrow 431. The UE 420 is configured as described above with reference to Fig. 1 and stores the digital vehicle key 430 in a data storage.

In the example of Fig. 4, the UE 420 sends the request data to the vehicle 410. The vehicle 410 is configured as described above with reference to Fig. 1 for the apparatus 110. In other words, the vehicle 410 comprises the apparatus 110 described above with reference to Fig. 1.

Accordingly, if the apparatus/vehicle 410 determines that the request is not in compliance with the vehicle access and/or control rights assigned to the digital vehicle key, the apparatus/vehicle 410 discards the request. On the other hand, if the apparatus/vehicle 410 determines that the request is in compliance with the vehicle access and/or control rights assigned to the digital vehicle key, the apparatus/vehicle 410 processes the request.

For example, if the request data indicate the request to execute the vehicle function at the vehicle, the apparatus/vehicle 410 controls one or more controller of the vehicle 410 to execute the requested vehicle function.

If the request data indicate the request to provide the dynamic status information, apparatus/vehicle 410 requests the dynamic status information from further vehicle circuitry of the vehicle 410 and forward the dynamic status information upon receipt to the UE 420 as indicated by arrow 411.

The UE 420 is able to process the dynamic status information. For example, the UE 420 may display a graphical representation of the dynamic status information or at least pieces of the dynamic status information similarly to what is described below with reference to Fig. 5 and Fig. 6.

**Fig. 5** illustrates a first exemplary graphical representation of dynamic status information. In the example of Fig. 5, the display 505 of the UE 500 is controlled to display three pieces of received dynamic status information in a digital wallet application of a user. The digital wallet is used to store the digital vehicle key in the data storage of the UE 500. The digital vehicle key is visualized by a corresponding card-like graphical element 540 in the graphical representation. A first graphical icon 510 in the graphical representation displays the lock status of the vehicle (i.e. whether the vehicle is locked or unlocked). A second graphical icon 520 in the graphical representation displays the geolocation of the vehicle. A third graphical icon 530 in the graphical representation displays the range of the vehicle and the state of charge of the vehicle's electric battery. By pressing the touch-sensitive display 505 at the display position of the first graphical icon 510, the user may provide a user input that causes generation and transmission of request data for requesting execution of a locking/unlocking function at the vehicle according to the above described principles.

**Fig. 6** illustrates a second exemplary graphical representation of dynamic status information. In the example of Fig. 6, the display 605 of the UE 600 is controlled to display the geolocation of the vehicle as an exemplary piece of received dynamic status information in a web mapping application. A first graphical icon 610 in the graphical representation displays the geolocation of the vehicle in textual form. A second graphical icon 620 in the graphical representation displays the geolocation of the vehicle in a map.

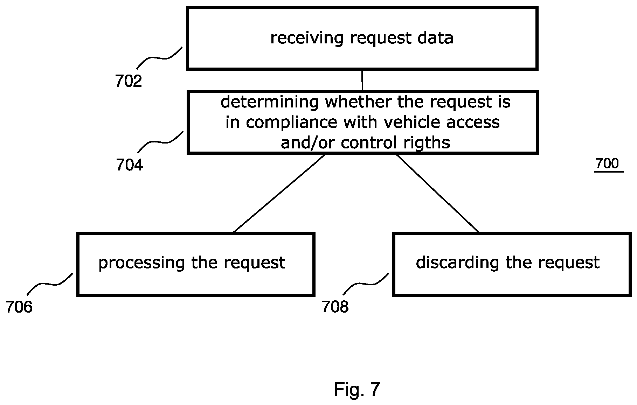

For further illustrating the proposed digital vehicle key utilization, **Fig. 7** illustrates a flowchart of a method 700. The method 700 comprises receiving 702 request data. The request data indicate a request to provide dynamic status information about a vehicle and/or to execute a vehicle function at the vehicle. Further, the request data indicate an identifier of a digital vehicle key for the vehicle and/or a token derived from the digital vehicle key. The method 700 additionally comprises determining 704, based on the identifier of the digital vehicle key and/or the token, whether the request is in compliance with vehicle access and/or control rights assigned to the digital vehicle key. If it is determined that the request is in compliance with the vehicle access and/or control rights assigned to the digital vehicle key, the method 700 comprises processing 706 the request. On the other hand, if it is determined that the request is not in compliance with the vehicle access and/or control rights assigned to the digital vehicle key, the method 700 comprises discarding 708 the request.

The method 700 may allow to use the digital vehicle key as identifier for accessing dynamic status information about the vehicle and/or executing a vehicle function at the vehicle. No other (e.g. third-party) identifiers are needed.

More details and aspects of the method 700 are explained in connection with the proposed technique or one or more examples described above (e.g. Figs. 1 to 6). The method 700 may comprise one or more additional optional features corresponding to one or more aspects of the proposed technique or one or more examples described above.

### References

- 100: system
- 110: apparatus
- 120: user equipment
- 121: data storage
- 122: processing circuitry
- 123: wireless communication circuitry
- 124: antenna
- 125: display
- 126: button
- 130: request data
- 140: response data
- 200: first data flow
- 210: vehicle
- 211: arrow
- 220: user equipment
- 221: arrow
- 222: arrow
- 230: server
- 231: arrow
- 232: arrow
- 240: server
- 241: arrow
- 242: arrow
- 243: arrow
- 250: digital vehicle key
- 251: arrow
- 410: vehicle
- 411: arrow
- 420: user equipment
- 421: arrow
- 430: digital vehicle key
- 431: arrow
- 500: user equipment
- 505: display
- 510: graphical icon
- 520: graphical icon
- 530: graphical icon
- 540: card-like graphical element
- 600: user equipment
- 605: display
- 610: graphical icon
- 620: graphical icon
- 700: method
- 702: receiving request data
- 704: determining whether the request is in compliance with vehicle access and/or control rights
- 706: processing the request
- 708: discarding the request

## Claims

1. A server (110) communicatively coupled to a vehicle via a network, the server (110) comprising circuitry configured to:
receive request data (130), the request data (130) indicating a request to provide dynamic status information about a vehicle and/or to execute a vehicle function at the vehicle, the request data (130) further indicating an identifier of a digital vehicle key for the vehicle;
determine, based on the identifier of the digital vehicle key, whether the request is in compliance with vehicle access and/or control rights assigned to the digital vehicle key; and
process the request, if it is determined that the request is in compliance with the vehicle access and/or control rights assigned to the digital vehicle key, wherein, for processing the request, the circuitry is configured to:
request the dynamic status information from the vehicle via the network and forward the dynamic status information upon receipt from the vehicle to a sender of the request data (130), if the request data (130) indicate the request to provide the dynamic status information; and
control the vehicle via the network to execute the vehicle function, if the request data (130) indicate the request to execute the vehicle function at the vehicle.

2. The server (110) of claim 1, wherein the circuitry is configured to forward the dynamic status information to the sender of the request data (130) together with an identifier of the vehicle.

3. The server (110) of claim 1 or claim 2, wherein the circuitry is further configured to discard the request, if it is determined that the request is not in compliance with the vehicle access and/or control rights assigned to the digital vehicle key.

4. The server (110) of any one of claims 1 to 3, wherein the dynamic status information is one or more of a geolocation of the vehicle, a lock status of the vehicle, a range of the vehicle, a state of charge of an electric battery of the vehicle and a fill level of a fuel tank of the vehicle.

5. The server (110) of any one of claims 1 to 4, wherein the identifier of the digital vehicle key comprises information about the vehicle access and/or control rights assigned to the digital vehicle key.

6. The server (110) of any one of claims 1 to 5, wherein the circuitry is further configured to retrieve information about the vehicle access and/or control rights assigned to the digital vehicle key from rights management circuitry based on the identifier of the digital vehicle key.

7. A method (700) for a server communicatively coupled to a vehicle via a network comprising:
receiving (702) request data, the request data indicating a request to provide dynamic status information about the vehicle and/or to execute a vehicle function at the vehicle, the request data further indicating an identifier of a digital vehicle key for the vehicle;
determining (704), based on the identifier of the digital vehicle key, whether the request is in compliance with vehicle access and/or control rights assigned to the digital vehicle key; and
processing (706) the request, if it is determined that the request is in compliance with the vehicle access and/or control rights assigned to the digital vehicle key, wherein processing (706) the request comprises:
requesting the dynamic status information from the vehicle via the network and forwarding the dynamic status information upon receipt from the vehicle to a sender of the request data, if the request data indicate the request to provide the dynamic status information; and
controlling the vehicle via the network to execute the vehicle function, if the request data indicate the request to execute the vehicle function at the vehicle.

8. The method (700) of claim 7, wherein the dynamic status information is forwarded to the sender of the request data (130) together with an identifier of the vehicle.

9. The method (700) of claim 7 or claim 8, wherein the method further comprises discarding the request, if it is determined that the request is not in compliance with the vehicle access and/or control rights assigned to the digital vehicle key.

10. The method (700) of any one of claims 7 to 9, wherein the dynamic status information is one or more of a geolocation of the vehicle, a lock status of the vehicle, a range of the vehicle, a state of charge of an electric battery of the vehicle and a fill level of a fuel tank of the vehicle.

11. The method (700) of any one of claims 7 to 10, wherein the identifier of the digital vehicle key comprises information about the vehicle access and/or control rights assigned to the digital vehicle key.

12. The method (700) of any one of claims 7 to 11, wherein the method further comprises retrieving information about the vehicle access and/or control rights assigned to the digital vehicle key from rights management circuitry based on the identifier of the digital vehicle key.

13. A system (100) comprising:
a server (110) according to any one of claims 1 to 6; and
a user equipment (120) comprising:
a data storage (121) configured to store the digital vehicle key;
processing circuitry (122) configured to generate the request data (130); and
wireless communication circuitry (123) configured to transmit the request data (130) to the server (110) or another server communicatively coupled to the server (110).

14. The system (100) of claim 13, wherein the wireless communication circuitry (123) is further configured to receive response data (140) indicating the requested dynamic status information in response to transmitting the request data (130), and wherein the processing circuitry (122) is further configured to control a display (125) of the user equipment (120) to display a graphical representation of the dynamic status information.

15. The system (100) of claim 13 or claim 14, further comprising a user interface (125, 126) configured to receive a user input, wherein the processing circuitry (122) is configured to generate the request data (130) in response to the user input.

## Patentansprüche

1. Server (110) kommunikativ gekoppelt mit einem Fahrzeug über ein Netzwerk, der Server (110) umfassend Schaltkreise, ausgelegt zum:
Empfangen von Anforderungsdaten (130), wobei die Anforderungsdaten (130) eine Anforderung angeben, dynamische Statusinformationen über ein Fahrzeug bereitzustellen und/oder eine Fahrzeugfunktion am Fahrzeug auszuführen, wobei die Anforderungsdaten (130) ferner eine Kennung eines digitalen Fahrzeugschlüssels für das Fahrzeug angeben;
Bestimmen, basierend auf der Kennung des digitalen Fahrzeugschlüssels, ob die Anforderung den dem digitalen Fahrzeugschlüssel zugewiesenen Rechten zu Fahrzeugzugang und/oder -steuerung entspricht; und
Verarbeiten der Anforderung, falls bestimmt wird, dass die Anforderung den dem digitalen Fahrzeugschlüssel zugewiesenen Rechten zu Fahrzeugzugang und/oder - steuerung entspricht, wobei zum Verarbeiten der Anforderung die Schaltkreise ausgelegt sind zum:
Anfordern der dynamischen Statusinformationen von dem Fahrzeug über das Netzwerk und Weiterleiten der dynamischen Statusinformationen bei Empfang von dem Fahrzeug an einen Sender der Anforderungsdaten (130), falls die Anforderungsdaten (130) die Anforderung angeben, um die dynamischen Statusinformationen bereitzustellen; und
Steuern des Fahrzeugs über das Netzwerk, um die Fahrzeugfunktion auszuführen, falls die Anforderungsdaten (130) die Anforderung angeben, um die Fahrzeugfunktionen am Fahrzeug auszuführen.

2. Server (110) nach Anspruch 1, wobei die Schaltkreise ausgelegt sind zum Weiterleiten der dynamischen Statusinformationen an den Sender der Anforderungsdaten (130) gemeinsam mit einer Kennung des Fahrzeugs.

3. Server (110) nach Anspruch 1 oder 2, wobei die Schaltung ferner konfiguriert ist zum Verwerfen der Anforderung, falls bestimmt wird, dass die Anforderung nicht den dem digitalen Fahrzeugschlüssel zugewiesenen Rechten zu Fahrzeugzugang und/oder -steuerung entspricht.

4. Server (110) nach einem der Ansprüche 1 bis 3, wobei die dynamischen Statusinformationen eines oder mehrere sind aus einer Geolokalisierung des Fahrzeugs, einem Verriegelungsstatus des Fahrzeugs, einer Reichweite des Fahrzeugs, einem Ladezustand einer elektrischen Batterie des Fahrzeugs und einem Füllstand eines Kraftstofftanks des Fahrzeugs.

5. Server (110) nach einem der Ansprüche 1 bis 4, wobei die Kennung des digitalen Fahrzeugschlüssels Informationen zu den dem digitalen Fahrzeugschlüssel zugewiesenen Rechten zu Fahrzeugzugang und/oder - steuerung umfasst.

6. Server (110) nach einem der Ansprüche 1 bis 5, wobei die Schaltkreise ferner ausgelegt sind zum Abrufen von Informationen zu den dem digitalen Fahrzeugschlüssel zugewiesenen Rechten zu Fahrzeugzugang und/oder - steuerung aus Rechteverwaltungsschaltkreisen, basierend auf der Kennung des digitalen Fahrzeugschlüssels.

7. Verfahren (700) für einen Server, der über ein Netzwerk kommunikativ mit einem Fahrzeug verbunden ist, umfassend:
Empfangen (702) von Anforderungsdaten, wobei die Anforderungsdaten eine Anforderung angeben, dynamische Statusinformationen über das Fahrzeug bereitzustellen und/oder eine Fahrzeugfunktion am Fahrzeug auszuführen, wobei die Anforderungsdaten ferner eine Kennung eines digitalen Fahrzeugschlüssels für das Fahrzeug angeben;
Bestimmen (704), basierend auf der Kennung des digitalen Fahrzeugschlüssels, ob die Anforderung den dem digitalen Fahrzeugschlüssel zugewiesenen Rechten zu Fahrzeugzugang und/oder -steuerung entspricht; und
Verarbeiten (706) der Anforderung, falls bestimmt wird, dass die Anforderung den dem digitalen Fahrzeugschlüssel zugewiesenen Rechten zu Fahrzeugzugang und/oder - steuerung entspricht, wobei das Verarbeiten (706) der Anforderung umfasst:
Anfordern der dynamischen Statusinformationen von dem Fahrzeug über das Netzwerk und Weiterleiten der dynamischen Statusinformationen bei Empfang von dem Fahrzeug an einen Sender der Anforderungsdaten, falls die Anforderungsdaten die Anforderung angeben, um die dynamischen Statusinformationen bereitzustellen; und
Steuern des Fahrzeugs über das Netzwerk, um die Fahrzeugfunktion auszuführen, falls die Anforderungsdaten die Anforderung angeben, um die Fahrzeugfunktionen am Fahrzeug auszuführen.

8. Verfahren (700) nach Anspruch 7, wobei die dynamischen Statusinformationen gemeinsam mit einer Kennung des Fahrzeugs an den Sender der Anforderungsdaten (130) weitergeleitet werden.

9. Verfahren (700) nach Anspruch 7 oder 8, wobei das Verfahren ferner das Verwerfen der Anforderung umfasst, falls bestimmt wird, dass die Anforderung nicht den dem digitalen Fahrzeugschlüssel zugewiesenen Rechten zu Fahrzeugzugang und/oder -steuerung entspricht.

10. Verfahren (700) nach einem der Ansprüche 7 bis 9, wobei die dynamischen Statusinformationen eines oder mehrere sind aus einer Geolokalisierung des Fahrzeugs, einem Verriegelungsstatus des Fahrzeugs, einer Reichweite des Fahrzeugs, einem Ladezustand einer elektrischen Batterie des Fahrzeugs und einem Füllstand eines Kraftstofftanks des Fahrzeugs.

11. Verfahren (700) nach einem der Ansprüche 7 bis 10, wobei die Kennung des digitalen Fahrzeugschlüssels Informationen zu den dem digitalen Fahrzeugschlüssel zugewiesenen Rechten zu Fahrzeugzugang und/oder - steuerung umfasst.

12. Verfahren (700) nach einem der Ansprüche 7 bis 11, wobei das Verfahren ferner das Abrufen von Informationen zu den dem digitalen Fahrzeugschlüssel zugewiesenen Rechten zu Fahrzeugzugang und/oder -steuerung aus Rechteverwaltungsschaltkreisen, basierend auf der Kennung des digitalen Fahrzeugschlüssels umfasst.

13. System (100), umfassend:
einen Server (110) nach einem der Ansprüche 1 bis 6; und
eine Benutzereinrichtung (120), umfassend:
einen Datenspeicher (121), ausgelegt zum Speichern des digitalen Fahrzeugschlüssels;
Verarbeitungsschaltkreise (122), ausgelegt zum Erzeugen der Anforderungsdaten (130); und
Drahtloskommunikationsschaltkreise (123), ausgelegt zum Senden der Anforderungsdaten (130) an den Server (110) oder an einen anderen, kommunikativ mit dem Server (110) gekoppelten Server.

14. System (100) nach Anspruch 13, wobei die Drahtloskommunikationsschaltkreise (123) ferner ausgelegt sind zum Empfangen von Antwortdaten (140), die die angeforderten dynamischen Statusinformationen angeben, als Reaktion auf das Senden der Anforderungsdaten (130), und wobei die Verarbeitungsschaltkreise (122) ferner ausgelegt sind zum Steuern einer Anzeige (125) der Benutzereinrichtung (120) zum Anzeigen einer grafischen Darstellung der dynamischen Statusinformationen.

15. System (100) nach Anspruch 13 oder 14, ferner umfassend eine Benutzerschnittstelle (125, 126), ausgelegt zum Empfangen einer Benutzereingabe, wobei die Verarbeitungsschaltkreise (122) ausgelegt sind zum Erzeugen der Anforderungsdaten (130) als Reaktion auf die Benutzereingabe.

## Revendications

1. Serveur (110) couplé en communication à un véhicule par l'intermédiaire d'un réseau, le serveur (110) comprenant une circuiterie configurée pour :
recevoir des données de demande (130), les données de demande (130) indiquant une demande de fournir des informations d'état dynamiques concernant un véhicule et/ou d'exécuter une fonction de véhicule dans le véhicule, les données de demande (130) indiquant en outre un identifiant d'une clef de véhicule numérique pour le véhicule ;
déterminer, sur la base de l'identifiant de la clef de véhicule numérique, le fait que la demande est, ou n'est pas, en conformité avec des droits d'accès et/ou de commande de véhicule attribués à la clef de véhicule numérique ; et
traiter la demande, s'il est déterminé que la demande est en conformité avec les droits d'accès et/ou de commande de véhicule attribués à la clef de véhicule numérique, dans lequel, pour traiter la demande, la circuiterie est configurée pour :
demander les informations d'état dynamiques auprès du véhicule par l'intermédiaire du réseau et renvoyer les informations d'état dynamiques, à la suite de la réception en provenance du véhicule, à un expéditeur des données de demande (130), si les données de demande (130) indiquent la demande de fournir les informations d'état dynamiques ; et
commander le véhicule par l'intermédiaire du réseau pour exécuter la fonction de véhicule, si les données de demande (130) indiquent la demande d'exécuter la fonction de véhicule dans le véhicule.

2. Serveur (110) de la revendication 1, dans lequel la circuiterie est configurée pour renvoyer les informations d'état dynamiques à l'expéditeur des données de demande (130) conjointement avec un identifiant du véhicule.

3. Serveur (110) de la revendication 1 ou la revendication 2, dans lequel la circuiterie est en outre configurée pour rejeter la demande, s'il est déterminé que la demande n'est pas en conformité avec les droits d'accès et/ou de commande de véhicule attribués à la clef de véhicule numérique.

4. Serveur (110) de l'une quelconque des revendications 1 à 3, dans lequel les informations d'état dynamiques sont un ou plusieurs éléments parmi une géolocalisation du véhicule, un état de verrouillage du véhicule, une autonomie du véhicule, une condition de charge d'une batterie électrique du véhicule, et un niveau de remplissage d'un réservoir de carburant du véhicule.

5. Serveur (110) de l'une quelconque des revendications 1 à 4, dans lequel l'identifiant de la clef de véhicule numérique comprend des informations concernant les droits d'accès et/ou de commande de véhicule attribués à la clef de véhicule numérique.

6. Serveur (110) de l'une quelconque des revendications 1 à 5, dans lequel la circuiterie est en outre configurée pour récupérer des informations concernant les droits d'accès et/ou de commande de véhicule attribués à la clef de véhicule numérique auprès d'une circuiterie de gestion de droits sur la base de l'identifiant de la clef de véhicule numérique.

7. Procédé (700) pour un serveur couplé en communication à un véhicule par l'intermédiaire d'un réseau comprenant :
la réception (702) de données de demande, les données de demande indiquant une demande de fournir des informations d'état dynamiques concernant le véhicule et/ou d'exécuter une fonction de véhicule dans le véhicule, les données de demande indiquant en outre un identifiant d'une clef de véhicule numérique pour le véhicule ;
la détermination (704), sur la base de l'identifiant de la clef de véhicule numérique, du fait que la demande est, ou n'est pas, en conformité avec des droits d'accès et/ou de commande de véhicule attribués à la clef de véhicule numérique ; et
le traitement (706) de la demande, s'il est déterminé que la demande est en conformité avec les droits d'accès et/ou de commande de véhicule attribués à la clef de véhicule numérique, dans lequel le traitement (706) de la demande comprend :
la demande des informations d'état dynamiques auprès du véhicule par l'intermédiaire du réseau et le renvoi des informations d'état dynamiques, à la suite de la réception en provenance du véhicule, à un expéditeur des données de demande, si les données de demande indiquent la demande de fournir les informations d'état dynamiques ; et
la commande du véhicule par l'intermédiaire du réseau pour exécuter la fonction de véhicule, si les données de demande indiquent la demande d'exécuter la fonction de véhicule dans le véhicule.

8. Procédé (700) de la revendication 7, dans lequel les informations d'état dynamiques sont renvoyées à l'expéditeur des données de demande (130) conjointement avec un identifiant du véhicule.

9. Procédé (700) de la revendication 7 ou la revendication 8, dans lequel le procédé comprend en outre le rejet de la demande, s'il est déterminé que la demande n'est pas en conformité avec les droits d'accès et/ou de commande de véhicule attribués à la clef de véhicule numérique.

10. Procédé (700) de l'une quelconque des revendications 7 à 9, dans lequel les informations d'état dynamiques sont un ou plusieurs éléments parmi une géolocalisation du véhicule, un état de verrouillage du véhicule, une autonomie du véhicule, une condition de charge d'une batterie électrique du véhicule, et un niveau de remplissage d'un réservoir de carburant du véhicule.

11. Procédé (700) de l'une quelconque des revendications 7 à 10, dans lequel l'identifiant de la clef de véhicule numérique comprend des informations concernant les droits d'accès et/ou de commande de véhicule attribués à la clef de véhicule numérique.

12. Procédé (700) de l'une quelconque des revendications 7 à 11, dans lequel le procédé comprend en outre la récupération d'informations concernant les droits d'accès et/ou de commande de véhicule attribués à la clef de véhicule numérique auprès d'une circuiterie de gestion de droits sur la base de l'identifiant de la clef de véhicule numérique.

13. Système (100), comprenant :
un serveur (110) selon l'une quelconque des revendications 1 à 6 ; et
un équipement utilisateur (120) comprenant :
un stockage de données (121) configuré pour stocker la clef de véhicule numérique ;
une circuiterie de traitement (122) configurée pour générer les données de demande (130) ; et
une circuiterie de communication sans fil (123) configurée pour transmettre les données de demande (130) au serveur (110) ou à un autre serveur couplé en communication au serveur (110).

14. Système (100) de la revendication 13, dans lequel la circuiterie de communication sans fil (123) est en outre configurée pour recevoir des données de réponse (140) indiquant les informations d'état dynamiques demandées, en réponse à la transmission des données de demande (130), et dans lequel la circuiterie de traitement (122) est en outre configurée pour commander un dispositif d'affichage (125) de l'équipement utilisateur (120) pour afficher une représentation graphique des informations d'état dynamiques.

15. Système (100) de la revendication 13 ou la revendication 14, comprenant en outre une interface utilisateur (125, 126) configurée pour recevoir une entrée utilisateur, dans lequel la circuiterie de traitement (122) est configurée pour générer les données de demande (130) en réponse à l'entrée utilisateur.
